(19) Europäisches Patentamt
European Patent Office
Office européen des brevets

(11) Publication number : **0 440 069 B1**

(12) **EUROPEAN PATENT SPECIFICATION**

(45) Date of publication of patent specification : **06.10.93 Bulletin 93/40**

(21) Application number : **91100747.4**

(22) Date of filing : **22.01.91**

(51) Int. Cl.$^5$ : **C10M 105/00,** C10M 105/42, C10M 105/46, C09K 5/04, // (C10M105/00, 105:42, 105:46, 105:52), C10N20:02, C10N40:30

(54) **Refrigeration oil composition.**

The file contains technical information submitted after the application was filed and not included in this specification

(30) Priority : **22.01.90 JP 12303/90**

(43) Date of publication of application : **07.08.91 Bulletin 91/32**

(45) Publication of the grant of the patent : **06.10.93 Bulletin 93/40**

(84) Designated Contracting States : **DE ES FR GB**

(56) References cited :
**EP-A- 0 218 207**
**WO-A-90/12849**
**GB-A- 1 460 665**
**GB-A- 2 216 541**

(73) Proprietor : **Kao Corporation**
**14-10, Nihonbashi Kayabacho 1-chome**
**Chuo-Ku Tokyo 103 (JP)**

(72) Inventor : **Hagihara, Toshiya**
**10-20-702, Ue-machi 2-chome**
**Izumisano-shi, Osaka (JP)**
Inventor : **Sakai, Akimitsu Kao Seiwaryo**
**1130, Nishihama**
**Wakayama-shi, Wakayama (JP)**
Inventor : **Kitazawa, Kozo**
**113-14, Shinzaike**
**Wakayama-shi, Wakayama (JP)**

(74) Representative : **Hansen, Bernd, Dr. Dipl.-Chem. et al**
**Hoffmann, Eitle & Partner Patent- und Rechtsanwälte, Postfach 81 04 20**
**D-81904 München (DE)**

EP 0 440 069 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to a refrigeration oil composition, a lubricating oil for a refrigerator or a refrigerator oil, comprising a hydrogenerated fluoroethane.

In order to protect the ozone layer, the use of dichlorodifluoromethane (CFC 12) in refrigerators and automotive air conditioner is now regulated and, furthermore, scheduled to be prohibited in future. Therefore, attempts have been made to develop various fluoroethane refrigerant, which would never destroy the ozone layer, as a substitute for CFC 12.

These fluoroethane refrigerant carriers are more polar than CFC 12 and thus poor in compatibility with conventional refrigeration oils such as naphthenic mineral oils and synthetic lubricant (for example, poly-$\alpha$-olefins, alkylbenzenes). When allowed to stand the conventional refrigeration oil/fluoroethane refrigerant system at a low temperature, therefore, the refrigeration oil and the fluoroethane refrigerant would separate into two layers, which deteriorates the return of the oil. As a result, a thick oil film is formed around a condenser or an evaporator employed as a heat exchanger, which causes serious problems such as the inhibition of heat transfer, the deterioration of the lubricating function or foaming at driving. Accordingly, these conventional refrigeration oils cannot be used with the aforesaid newly developed refrigerant.

From the viewpoint of lubricating properties, CFC 12 would partially decompose to thereby evolve hydrogen chloride which would react with a rubbing surface and form a chloride film thereon to thereby improve the lubricating properties. In the case of a fluoroethane refrigerant free from any chlorine atom (for example, pentafluoroethane, 1,1,1-trifluoroethane, 1,1-difluoroethane), however, no such an effect can be expected. Therefore a refrigeration oil to be used together with such a chlorine-free fluoroethane refrigerant carrier should be further improved in lubricating properties.

Furthermore, it is required that a refrigeration oil has an excellent thermal stability under a refrigerant atmosphere and exerts no undesirable effect on insulating materials employed in refrigerators or organic materials such as hosings employed in automotive air conditioners.

Regarding the problem of the compatibility with a fluoroethane refrigerant, there have been proposed polyethers. These polyethers have higher polarities than those of naphthenic mineral oils and thus show good compatibilities with the aforesaid refrigerant at a low temperature. As U.S. Patent 4,755,316 points out, however, such polyethers causes separation into two layers at a higher temperature, which makes them unsuitable as a refrigeration oil.

The polyethers further suffer from some problems. Namely, they are highly polar and thus show mutual interaction with an insulating material such as a PET film employed in a refrigerator, thus causing undesirable effects. Further, the polyethers are highly hygroscopic. The moisture contained in such a lubricating oil would deteriorate the thermal stability under a refrigerant atmosphere or cause the hydrolysis of an organic material such as a PET film.

Furthermore, the lubricating properties of the polyethers are not satisfactory. Thus the fluoroethane refrigerant/polyethers system is inferior to a conventional CFC 12/naphthenic mineral oil system.

On the other hand, there has been proposed in the field of refrigeration oil to use an ester together with fluoromethane (refer to, for example, JP-A-56-131548, JP-A-56-133241, JP-A-61-181895, JP-A-62-592; the term "JP-A" as used herein means an "unexamined published Japanese patent application"). Further, JP-A-56-125494, JP-A-56-125495 and JP-A-61-62596 describe each a method wherein an ester is used in the form of a mixture with another lubricating oil. Furthermore, JP-A-55-155093, JP-A-56-36570, JP-A-56-125494, JP-A-58-15592, JP-A-58-103594, JP-A-61-171799 and JP-A-62-292895 teach each an example of the use of a mixture of an ester and additive(s). However each of these prior arts relates to a system to be used together with a dichlorodifluoromethane (CFC 12) or monochlorodifluoromethane (HCFC 22) refrigerant and thus no fluoroethane refrigerant is described therein. Further, these prior arts aim at improving the thermal stability of a lubricating oil under a CFC 12 or HCFC 22 atmosphere. In addition, JP-A-53-143609 (corresponding to U.S. Patent 4,159,255) and JP-A-59-164393 describe the improvement of the thermal stability of a lubricating oil under a fluorocarbon atmosphere and the compatibility of the lubricating oil with CFC 12 and HCFC 22. However the former publication and the latter one respectively aim at providing lubricating oils which are not excessively soluble in CFC 12 and HCFC 22. Thus no description for the improvement of the compatibility of a lubricating oil with a fluoroethane refrigerant can be found therein.

As described above, there have been neither any attempts nor any particular suggestions in prior arts to develop a refrigeration oil which is excellent in compatibility, thermal stability and lubricating properties under a fluoroethane refrigerant atmosphere.

WO 90/12849 representing prior art according to Article 54(3) EPC includes a liquid composition comprising a major amount of at least one fluorine-containing hydrocarbon containing 1 or 2 carbon atoms and a minor amount of at least one soluble organic lubricant comprising at least one carboxylic ester of a polyhydroxy compound containing at least two hydroxy groups.

GB-A-2 216 541 discloses a working fluid/lubricant combination for use in a mechanical vapor recompression-type heat transfer device, wherein the working fluid comprises a hydrofluorocarbon, hydrochlorofluorocarbon or chlorofluorocarbon and the lubricant comprises an ester having a molecular weight greater than 250.

Accordingly, it is an object of the present invention to provide a refrigeration oil which has a sufficient viscosity and a good compatibility with a fluoroethane refrigerant both at a low temperature and at a high temperature and shows a high thermal stability and excellent lubricating properties under the refrigerant atmosphere.

We have conducted extensive studies in order to achieve the above object. As a result, we have found out that a specific ester compound is useful in the achievement of the above object, thus completing the present invention.

A refrigeration oil composition of the invention comprises (1) a hydrogenated fluoroethane and (2) an ester compound obtainable by the reaction of the following three components:

(2-a) a hindered alcohol represented by the following formula (I):

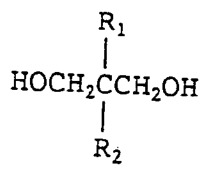

(I)

wherein $R_1$ and $R_2$ each represents an alkyl group having 1 to 6 carbon atoms;

(2-b) a saturated aliphatic monohydric straight-chain or branched alcohol having 1 to 10 carbon atoms, and

(2-c) a straight-chain or branched saturated aliphatic dicarboxylic acid having 2 to 8 carbon atoms or a derivative thereof;

wherein the ester compound furthermore includes a kinematic viscosity at 100°C of 1 cst to 100 cst and a saponification value of at least 330 mg KOH/g.

It is preferable that a weight ratio of the hydrogenated fluoroethane (1) to the ester compound (2) ranges from 10/1 to 1/5.

The saturated aliphatic monohydric alcohol to be used in the preparation of an ester as the component (2-b) in the present invention has 1 to 10, preferably 5 to 8, carbon atoms. If the number of the carbon atoms thereof exceeds 10, the obtained refrigeration oil has a poor compatibility with a fluoroethane refrigerant. Specific examples of the aliphatic monohydric alcohol include methanol, ethanol, propanol, isopropanol, butanol, 1-methylpropanol, 2-methylpropanol, t-butanol, pentanol, 2-methylbutanol, 3-methylbutanol, 1-ethylpropanol, hexanol, 2-methylpentanol, 2-ethylbutanol, 2,3-dimethylbutanol, heptanol, 2-methylhexanol, 3-methylhexanol, 5-methylhexanol, octanol, 2-ethylhexanol, 2-methylheptanol, 3,5-dimethylhexanol, nonanol, 3,5,5-trimethylhexanol, decyl alcohol and 2,4,6-trimethylheptanol. These compounds can be used either alone or as a mixture of two or more of them.

Specific examples of the above-mentioned component (2-c) include oxalic acid, malonic acid, methylmalonic acid, succinic acid, ethylmalonic acid, dimethylmalonic acid, methylsuccinic acid, glutaric acid, adipic acid, 2,2-dimethyl-succinic acid, 2,3-dimethylsuccinic acid, 2-methyl-glutaric acid, 3-methylglutaric acid, butylmalonic acid, diethylmalonic acid, 2,2-dimethylglutaric acid, 2,4-dimethylglutaric acid, 3,3-dimethylglutaric acid, 2-ethyl-2-methylsuccinic acid, 3-methyladipic acid, pimelic acid, suberic acid and 2,2-dimethyladipic acid.

The compatibility of the ester of the present invention with a fluoroethane refrigerant at a low temperature would be generally deteriorated with an increase in the viscosity thereof. From the viewpoint of compatibility, therefore, the kinematic viscosity of the ester at 100°C ranges from 1 cst to 100 cst, preferably from 1 cst to 30 cst. From the viewpoint of the compatibility with a fluoroethane refrigerant, furthermore, the saponification value of the ester of the present invention is at least 330 mg KOH/g or above, and preferably 350 mg KOH/g or above. If the saponification value thereof is smaller than the limit as specified above, only a poor compatibility with a fluoroethane refrigerant is achieved.

With regard to the corrosion resistance against metals and the hydrolysis-stability at least the component (2-a) of the ester of the present invention has a branched structure.

From the viewpoint of thermal resistance, the hindered alcohol of formula (I) is particularly excellent.

The esters of the present invention, are particularly excellent in the compatibility with a fluoroethane refrigerant at a low temperature and lubricating properties.

The ester to be used in the present invention may be obtained by subjecting at least one of the abovementioned hindered alcohols [(2-a)], at least one of the abovementioned monohydric alcohols [(2-b)] and at least one of the above-mentioned dicarboxylic acids, lower alkyl esters thereof and acid anhydrides thereof [(2-c)] to an esterification or ester-exchange reaction in a manner as disclosed, for example, in H. Loewe, Die Pharmazie, 3, 116 (1948). In this reaction, the hindered alcohol is used in an amount of 1.5 mol or below per mol of the dicarboxylic acid or a derivative thereof. And the monohydric alcohol is used in an amount of 4.0 mol or below per mol of the dicarboxylic acid or a derivative thereof. When the hindered alcohol is used in a larger amount, the obtained ester has an excessively high viscosity. It is preferable to minimize the acid value of the obtained ester. Namely, it may be 5 mg KOH/g or below, preferably 1 mg KOH/g or below and more preferably 0.2 mg KOH/g or below.

The refrigeration oil of the present invention comprises the above-mentioned ester as the base oil. It may further comprise, if required, other lubricating oils such as mineral oils, poly-α-olefins, alkyl benzenes, esters other than those specified above, synthetic oils such as polyether, other lubricating oils such as perfluoropolyether and phosphoric esters and mixtures thereof. However the synthetic oils are not restricted by those cited above. In the refrigeration oil of the present invention, the weight ratio of the ester to other lubricating oil(s) may be arbitrarily selected so long as the performances of the refrigeration oil, for example, the compatibility with a hydrogen-containing fluoroethane refrigerant are not deteriorated thereby. Generally speaking, the weight ratio of the ester of the present invention to the other lubricating oils may range from 100/0 to 5/95, preferably from 100/0 to 10/90 and more preferably from 100/0 to 30/70.

The ester of the present invention has excellent properties relating to a fluoroethane refrigerant. When used under a hydrogen-containing fluoroethane refrigerant atmosphere, in particular, it is excellent in compatibility, thermal resistance and lubricating properties. Examples of the hydrogen-containing fluoroethane refrigerant include 1,1,1,2-tetrafluoroethane (HFC 134a), 1,1,1,2-tetrafluoro-2-chloroethane (HCFC 124), pentafluoroethane (HFC 125), 1,1-difluoro-1-chloroethane (HCFC 142b), 1,1,1-trifluoroethane (HFC 143a) and 1,1-difluoroethane (HFC 152a).

The refrigeration oil of the present invention may further contain additives commonly employed in the field of lubricating oils (for example, antioxidants, extreme pressure agents, oiliness improvers, defoaming agents, metal deactivator), if required.

Examples of available antioxidants include phenolic antioxidants such as 2,6-di-t-butyl-4-methylphenol and 4,4'-methylenebis(2,6-di-t-butylphenol); amine antioxidants such as p,p-dioctylphenylamine, monooctyldiphenylamine, phenothiazine, 3,7-dioctylphenothiazine, phenyl-1-naphthylamine, phenyl-2-naphthylamine, alkylphenyl-1-naphthylamines and alkylphenyl-2-naphthylamines; sulfur-containing antioxidants such as alkyl disulfides, thiodipropionic acid esters and benzothiazole; and zinc dialkyl dithiophosphates and zinc diaryl dithiophosphates.

Examples of available extreme pressure agents and oiliness improvers include zinc compounds such as zinc dialkyl dithiophosphates and zinc diaryl dithiophosphates; sulfur compounds such as thiodipropionic esters, dialkyl sulfides, dibenzyl sulfides, dialkyl polysulfides, alkyl-mercaptans, dibenzothiophene and 2,2'-dithiobis(benzothiazole); phosphorus compounds such as triaryl phosphates including tricresyl phosphate or trialkyl phosphates, dialkyl or diaryl phosphates, trialkyl or triaryl phosphites, dialkyl or diaryl phosphites and monoalkyl or monoaryl phosphites; fluorine compounds such as perfluoroalkyl polyethers, trifluorochloroethylene polymers and graphite fluoride; silicon compounds such as a fatty acid-modified silicone; organic molybdenum compounds, molybdenum disulfide and graphite.

Examples of available defoaming agents include silicone oils such as dimethylpolysiloxane, and organosilicates such as diethyl silicate. Examples of available metal deactivators include alizarin, quinizarin and mercaptobenzothiazole. In addition, the refrigeration oil of the present invention may further contain various additives (for example, epoxy compounds such as phenyl glycidyl ether, alkyl glycidyl ethers, epoxystearic acid esters or epoxydized vegetable oils, organotin compounds, boron compounds) in order to stabilize a fluorocarbon refrigerant.

The refrigeration oil of the present invention, which has a sufficient viscosity, an excellent compatibility with a hydrogenated fluoroethane refrigerant, a high thermal stability under an atmosphere of the refrigerant and excellent lubricating properties, is a highly useful lubricating oil for refrigerators.

To further illustrate the present invention, and not by way of limitation, the following Examples will be given.

## EXAMPLE 1

A four-necked flask was provided with a stirrer, a thermometer, a nitrogen inlet and a dehydrating tube equipped with a cooler. 52 g (0.5 mol) of neopentyl glycol, 116 g (1.0 mol) of 2-methylhexanol and 132 g (1.0 mol) of glutaric acid were put into the flask and subjected to an esterification under a nitrogen gas stream at

240°C for 10 hours. Thus the ester according to the present invention (Product of the Invention 1) was obtained.

Further, the above procedure was repeated with the use of the alcohols and carboxylic acids as specified in Table 1 to thereby give the esters according to the present invention (Products of the Invention 2 to 7) and comparative esters (Comparative Products 1 to 6).

The kinematic viscosity (at 40 °C and 100 °C), the viscosity index (according to JIS K-2283 (the term "JIS" used herein refers to "Japanese Industrial Standard")) and the pour point (according to JIS K-2269) of each of Products of the Invention 1 to 5 and Comparative Products 1 to 12 shown in Table 1 were measured.

Table 1 summarizes the results.

TABLE 1

| | Carboxylic acid | Polyhydric alcohol (mol per mol of carboxylic acid) | Monohydric alcohol (mol per mol of carboxylic acid) | Viscosity 40°C (cst) | Viscosity 100°C (cst) | Viscosity Index | Pour point (°C) |
|---|---|---|---|---|---|---|---|
| Product of the Invention 1 | glutaric acid | neopentyl glycol (0.5) | 2-methylhexanol (1.0) | 25.5 | 5.45 | 157 | -55> |
| Product of the Invention 2 | glutaric acid | neopentyl glycol (0.7) | 2-methylhexanol (0.6) | 91.3 | 13.0 | 141 | -55> |
| Product of the Invention 3 | adipic acid | neopentyl glycol (0.6) | 2-ethylhexanol (0.8) | 51.2 | 8.43 | 140 | -55> |
| Product of the Invention 4 | adipic acid | neopentyl glycol (0.5) | hexanol (1.0) | 21.2 | 4.93 | 167 | -55> |
| Product of the Invention 5 | glutaric acid | 2,2-diethyl-1,3-propanediol (0.5) | 2-methylheptanol (1.0) | 30.7 | 5.70 | 128 | -55> |

TABLE 1 (cont'd)

| | Carboxylic acid | Polyhydric alcohol (mol per mol of carboxylic acid) | Monohydric alcohol (mol per mol of carboxylic acid) | Viscosity 40°C (cst) | Viscosity 100°C (cst) | Viscosity Index | Pour point (°C) |
|---|---|---|---|---|---|---|---|
| Comparative Product 1 | 8-ethylocta-decandioic acid | neopentyl glycol (0.5) | hexanol (1.0) | 56.0 | 10.8 | 188 | -55> |
| Comparative Product 2 | adipic acid | trimethylol propane (0.1) | oleyl alcohol (1.7) | 75.1 | 16.1 | 230 | -55> |
| Comparative Product 3 | adipic acid | - | isotridecyl alcohol (2.0) | 26.6 | 5.28 | 135 | -55> |
| Comparative Product 4 | trimethylolpropane-caprylate, caprate and laurate | | | 19.7 | 4.42 | 140 | -42.5 |
| Comparative Product 5 | trimethylolpropane-adipate, caprylate and caprate | | | 75.7 | 11.7 | 149 | -52.5 |
| Comparative Product 6 | neopentyl glycol dioleate | | | 24.7 | 6.03 | 207 | -27.5 |
| Comparative Product 7 | naphthenic oil | | | 30.0 | 4.44 | 14 | -42.5 |
| Comparative Product 8 | poly-α-olefin | | | 29.9 | 5.68 | 133 | -55> |

TABLE 1 (cont'd)

| | Carboxylic acid | Polyhydric alcohol (mol per mol of carboxylic acid) | Monohydric alcohol (mol per mol of carboxylic acid) | Viscosity 40°C (cst) | Viscosity 100°C (cst) | Viscosity Index | Pour point (°C) |
|---|---|---|---|---|---|---|---|
| Comparative Product 9 | polyoxypropylene glycol monoalkyl ether | | | 33.5 | 6.94 | 174 | -55 |
| Comparative Product 10 | poly(oxyethylene oxypropylene) glycol monoalkyl ether | | | 20.3 | 4.83 | 170 | -55 |
| Comparative Product 11 | polyoxypropylene glycol monoalkyl ether | | | 60.2 | 10.7 | 170 | -50 |
| Comparative Product 12 | polyoxypropylene glycol glycerol ether | | | 250 | 11.2 | -86 | -31 |

EXAMPLE 2

The compatibility of each of Products of the Invention 1 to 5 and the Comparative Products 1 to 12 obtained in Example 1 with 1,1,1,2-tetrafluoroethane (HFC 134a) was examined in the following manner. Namely, the phase separation points of the samples at a concentration of 10 % by volume to 1,1,1,2-tetrafluoroethane were determined at low and high temperatures.

In the cases of some comparative products showing insufficient separation into two layers at a low temperature, the determination of the separation point at a high temperature was omitted.

Table 2 shows the results.

As Table 2 clearly shows, each ester of the present invention was highly compatible with 1,1,1,2-tetrafluoroethane and showed no decrease in the compatibility even at a high temperature. The esters of the present invention (i.e., Products of the Invention 1 to 5) showed, in particular, high compatibilities at a low temperature. Product of the Invention 2 showed a sufficiently high compatibility even at a high viscosity.

TABLE 2

| | Separation Point at low temperature (°C) | Separation Point at high temperature (°C) |
| --- | --- | --- |
| Product of the Invention 1 | -60> | 70< |
| Product of the Invention 2 | -60> | 70< |
| Product of the Invention 3 | -60> | 70< |
| Product of the Invention 4 | -60> | 70< |
| Product of the Invention 5 | -60> | 70< |
| Comparative Product 1 | 30< | not determined |
| Comparative Product 2 | 30< | not determined |
| Comparative Product 3 | 30< | not determined |
| Comparative Product 4 | 30< | not determined |
| Comparative Product 5 | 30< | not determined |
| Comparative Product 6 | 30< | not determined |
| Comparative Product 7 | 30< | not determined |
| Comparative Product 8 | 30< | not determined |

TABLE 2 (cont'd)

| | Separation Point at low temperature (°C) | Separation Point at high temperature (°C) |
|---|---|---|
| Comparative Product 9 | -60> | 70< |
| Comparative Product 10 | -60> | 70< |
| Comparative Product 11 | -60> | 58 |
| Comparative Product 12 | 30< | not determined |

EXAMPLE 3

Products of the Invention 1, 2, 3 and 5 and Comparative Products 7 to 10 obtained in Example 1 were subjected to Falex test in order to examine the load resistance thereof.

Namely, 1,1,1,2-tetrafluoroethane (HFC 134a) was blown into each product at a rate of 150 cc/min. After rotating wihtout load for 10 minutes, the sample was preliminarily rotated under a load of 90.9kg (200 lb) for 5 minutes followed by rotating while increasing the load at a rate of 9.09kg (20 lb) per 2 minutes. Thus the seizure load was examined.

Table 3 shows the results.

As Table 3 clearly shows, the seizure load of the naphthenic oil (Comparative Product 7) determined upon blowing 1,1,1,2-tetrafluoroethane [204.5kg (450 lb)] was lower than that determined upon blowing dichlorodifluoromethane (CFC 12) (Referential Example 1, 272.7kg (600 lb)). The poly-α-olefin (Comparative Product 8) and polyethers (Comparative Products 9 and 10) showed load resistance of 250kg (550 lb) or below upon blowing 1,1,1,2-tetrafluoroethane. On the other hand, each ester according to the present invention showed a seizure load exceeding 272.7kg (600 lb) upon blowing 1,1,1,2-tetrafluoroethane, showing exellent load resistance.

TABLE 3

| | Break Load (kg) [(lb)] |
|---|---|
| Product of the Invention | 545.5 [(1200)] |
| Product of the Invention | <636.3 [(1400<)] |
| Product of the Invention | 636.4 [(1400)] |
| Product of the Invention | 545.5 [(1200)] |
| Comparative Product 7 | 204.5 [(450)] |
| Comparative Product 8 | 204.5 [(450)] |
| Comparative Product 9 | 250 [(550)] |
| Comparative Product 10 | 250 [(550)] |
| Reference Example 1* | 272.7 [(600)] |

Note *: Data obtained by blowing dichlorodifluoromethane (CFC 12) to comparative product 7.

EXAMPLE 4

Products of the Invention 1, 2, 3 and 5 and Comparative Products 7 to 10 obtained in Example 1 were subjected to Falex test in order to examine the wear resistances thereof.

Namely, 1,1,1,2-tetrafluoroethane (HFC 134a) was blown into each product at a rate of 150 cc/min. After rotating without load for 10 minutes, the sample was preliminarily rotated under a load of 90.9kg (200 lb) for 5 minutes followed by rotating under a load of 159.1kg (350 lb) for 60 minutes. After the completion of the rotation, the wear conditions of a V block and a pin were examined.

Table 4 shows the results.

As Table 4 clearly shows, the esters according to the present invention were superior in wear resistance to the naphthenic oil (Comparative Product 7), poly-α-olefin (Comparative Product 8) and polyethers (Comparative Products 9 and 10). The wear resistances of Products of the Invention were comparable, or even exceeded, the one achieved by blowing dichlorodifluoromethane (CFC 12) to naphthenic oil (Referential Example 1). The esters according to the present invention 1, 2, 3 and 5 were particularly excellent in wear resistance.

TABLE 4

| | Amount of Wear (mg) |
|---|---|
| Product of the Invention 1 | 14.3 |
| Product of the Invention 2 | 9.7 |
| Product of the Invention 3 | 12.7 |
| Product of the Invention 5 | 13.1 |
| Comparative Product 7 | seizure |
| Comparative Product 8 | seizure |
| Comparative Product 9 | 40.2 |
| Comparative Product 10 | 46.3 |
| Reference Example 1* | 14.9 |

Note *: Data obtained by blowing dichlorodifluoromethane (CFC 12) to comparative product 7.

EXAMPLE 5

To examine the thermal stabilities of Products of the Invention 1, 2, 3 and 5 obtained in Example 1 under a 1,1,1,2-tetrafluoroethane atmosphere, a sealed tube test (175°C for 14 days) was performed with the use of iron, copper and aluminum as a catalyst.

Table 5 shows the results.

As Table 5 clearly shows, each ester according to the present invention showed an excellent appearance without forming any precipitate, which indicates that it has a high thermal stability.

TABLE 5

| | Appearance | Precipitate |
|---|---|---|
| Product of the Invention 1 | good | none |
| Product of the Invention 2 | good | none |
| Product of the Invention 3 | good | none |
| Product of the Invention 5 | good | none |

EXAMPLE 6

The hygroscopicities of Products of the Invention 1 and 5 and Comparative Products 9 and 10 obtained in Example 1 were examined in the following manner.

Namely, a change in water quantity of each sample was monitored by Karl-Fischer method at a temperature of 25°C under a humidity of 80 %.

Table 6 shows the results.

As Table 6 clearly shows, the esters according to the present invention were lower hygroscopicity than polyethers of the comparative ones.

TABLE 6

| | Water quantity | | | |
|---|---|---|---|---|
| | 0 hr (ppm) | 2 hr (ppm) | 10 h (ppm) | 24 hr (ppm) |
| Product of the Invention 1 | 17 | 610 | 1200 | 1600 |
| Product of the Invention 5 | 20 | 500 | 1000 | 1500 |
| Comparative Product 9 | 46 | 1900 | 5600 | 13000 |
| Comparative Product 10 | 49 | 4100 | 13000 | 29000 |

**Claims**

1. A refrigeration oil composition comprising (1) a hydrogenated fluoroethane and (2) an ester compound obtainable by the reaction of the following three components:
(2-a) a hindered alcohol represented by the following formula (I):

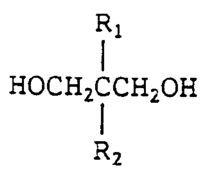

(I)

wherein $R_1$ and $R_2$ each represents an alkyl group having 1 to 6 carbon atoms;
(2-b) a saturated aliphatic monohydric straight-chain or branched alcohol having 1 to 10 carbon atoms, and
(2-c) a straight-chain or branched saturated aliphatic dicarboxylic acid having 2 to 8 carbon atoms or a derivative thereof;
wherein the ester compound furthermore has a kinematic viscosity at 100°C of 1 cst to 100 cst and a saponification value of at least 330 mg KOH/g.

2. An oil composition as in claim 1, wherein said saturated aliphatic monohydric alcohol contains 5 to 8 carbon atoms.

3. An oil composition as in claim 1, wherein said polyhydric alcohol is used in an amount of 1.5 mol or less per mol of said aliphatic polycarboxylic acid or a derivative thereof.

4. An oil composition as in claim 1, wherein said monohydric alcohol is used in an amount of 4.0 mol or less per mol of said aliphatic polycarboxylic acid or a derivative thereof.

5. An oil composition as in claim 1, wherein a weight ratio of the hydrogenated fluoroethane to said ester compound ranges from 10/1 to 1/5.

6. An oil composition as in claim 1, wherein the hydrogenated fluoroethane is 1,1,1,2-tetrafluoroethane.

7. The use of an oil composition according to any of preceding claims 1 to 6 for refrigeration.

8. The use of an oil composition according to any of the preceding claims 1 to 6 for a lubricating oil for a refrigerator or a refrigerator oil.

## Patentansprüche

1. Kältemaschinenölzusammensetzung umfassend (1) ein hydriertes Fluorethan und (2) eine Esterverbindung, die durch die Reaktion der folgenden drei Komponenten erhältlich ist:

   (2-a) eines gehinderten Alkohols, der durch die folgende Formel (I) dargestellt wird:

   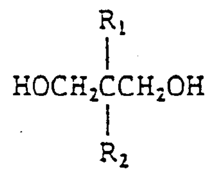 (I)

   worin $R_1$ und $R_2$ jeweils eine Alkylgruppe mit 1 bis 6 Kohlenstoffatomen darstellen;

   (2-b) eines gesättigten aliphatischen einwertigen geradkettigen oder verzweigten Alkohols mit 1 bis 10 Kohlenstoffatomen, und

   (2-c) einer geradkettigen oder verzweigten gesättigten aliphatischen Dicarbonsäure mit 2 bis 8 Kohlenstoffatomen oder eines Derivats derselben;

   wobei die Esterverbindung darüber hinaus eine kinematische Viskosität von 1 cst bis 100 cst bei 100°C und eine Verseifungszahl von mindestens 330 mg KOH/g hat.

2. Ölzusammensetzung nach Anspruch 1, in der der gesättigte aliphatische einwertige Alkohol 5 bis 6 Kohlenstoffatome enthält.

3. Ölzusammensetzung nach Anspruch 1, in der der einwertige Alkohol in einer Menge von 1,5 Mol oder weniger pro Mol aliphatische Polycarbonsäure oder Derivat derselben verwendet wird.

4. Ölzusammensetzung nach Anspruch 1, in der der einwertige Alkohol in einer Menge von 4,0 Mol oder weniger pro Mol aliphatische Polycarbonsäure oder Derivat derselben verwendet wird.

5. Ölzusammensetzung nach Anspruch 1, in der das Gewichtsverhältnis des hydrierten Fluorethan zur Esterverbindung im Bereich von 10/1 bis 1/5 liegt.

6. Ölzusammensetzung nach Anspruch 1, in der das hydrierte Fluorethan 1,1,1,2-Tetrafluorethan ist.

7. Verwendung einer Ölzusammensetzung nach einem der vorhergehenden Ansprüche 1 bis 7 zur Kälteerzeugung.

8. Verwendung einer Ölzusammensetzung nach einem der vorhergehenden Ansprüche 1 bis 6 als Schmieröl für eine Kältemaschine oder als Kältemaschinenöl.

## Revendications

1. Composition d'huile pour réfrigération comprenant (1) un fluoroéthane hydrogéné et (2) un composé d'ester que l'on peut obtenir par la réaction des trois composants suivants:

   (2-a) un alcool encombré représenté par la formule suivante (I):

   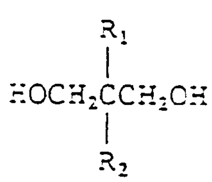 (I)

   dans laquelle $R_1$ et $R_2$ représentent chacun un groupe alkyle ayant de 1 à 6 atomes de carbone;

   (2b) un alcool monohydroxylé aliphatique saturé à chaîne droite ou ramifiée ayant de 1 à 10 atomes de carbone, et

(2c) un acide dicarboxylique aliphatique saturé à chaîne droite ou ramifiée ayant de 2 à 8 atomes de carbone ou un de ses dérivés;

dans laquelle en outre le composé ester a une viscosité cinématique à 100 °C de 1 cSt à 100 cSt et un indice de saponification d'au moins 330 mg de KOH par g.

2. Composition d'huile comme dans la revendication 1, dans laquelle l'alcool monohydroxylé aliphatique saturé contient 5 à 8 atomes de carbone.

3. Composition d'huile comme dans la revendication 1 dans laquelle ledit alcool polyhydroxylé est utilisé dans une quantité de 1,5 mole ou moins par mole dudit acide polycarboxylique aliphatique ou d'un de ses dérivés.

4. Composition d'huile comme dans la revendication 1 dans laquelle ledit alcool polyhydroxylé est utilisé dans une quantité de 4,0 mole ou moins par mole dudit acide polycarboxylique aliphatique ou d'un de ses dérivés.

5. Composition d'huile comme dans la revendication 1 dans laquelle le rapport molaire du fluoroéthane hydrogéné audit composé ester va de 10/1 à 1/5.

6. Composition d'huile comme dans la revendication 1 dans laquelle ledit fluoroéthane hydrogéné est le 1,1,1,2-tétrafluoroéthane.

7. Utilisation d'une composition d'huile selon une quelconque des revendications 1 à 6 qui précèdent pour la réfrigération.

8. Utilisation d'une composition d'huile selon une quelconque des revendications 1 à 6 qui précèdent en tant qu'huile lubrifiante pour une machine frigorifique ou une huile pour machine frigorifique.